Europäisches Patentamt

(19) European Patent Office

Office européen des brevets

(11) Numéro de publication: **0 227 530**
**B1**

## (12) FASCICULE DE BREVET EUROPEEN

(45) Date de publication du fascicule du brevet:
**01.08.90**

(21) Numéro de dépôt: **86402637.2**

(22) Date de dépôt: **27.11.86**

(51) Int. Cl.⁵: **G11B 20/12**, G11B 7/013,
G11B 27/02, G11B 27/30,
G06F 15/40

(54) **Procédé d'écriture avec mise à jour et de lecture d'informations sur un support non effaçable organisé en secteurs.**

(30) Priorité: **29.11.85 FR 8517670**

(43) Date de publication de la demande:
**01.07.87 Bulletin 87/27**

(45) Mention de la délivrance du brevet:
**01.08.90 Bulletin 90/31**

(84) Etats contractants désignés:
**DE GB**

(56) Documents cités:
**EP-A- 0 046 323**
**EP-A- 0 072 704**
**GB-A- 1 383 105**
**GB-A- 2 157 035**
**US-A- 4 142 209**

**IBM TECHNICAL DISCLOSURE BULLETIN,
vol. 24, no. 1B, juin 1981, pages 775-776, New York, US;
D.D. GROSSMAN: "Updating non-erasable storage"
PROCEEDINGS OF THE INTERNATIONAL
CONFERENCE ON DATA ENGINEERING, Los Angeles,
US, 24-27 avril 1984, pages 175-180, IEEE; P.
RATHMANN: "Dynamic data structures on optical
disks"**

(73) Titulaire: **Picard, Michel, 16, Cours du Buisson,
F-77420 Noislel(FR)**

(72) Inventeur: **Picard, Michel, 16, Cours du Buisson,
F-77420 Noislel(FR)**

(74) Mandataire: **Mongrédien, André et al, c/o
BREVATOME 25, rue de Ponthieu, F-75008 Paris(FR)**

## Description

La présente invention a pour objet un procédé d'écriture avec mise à jour et de lecture d'informations sur un support non effaçable organisé en secteurs. Les supports non effaçables sont utilisés en particulier pour l'archivage d'informations volumineuses, car ils sont peu coûteux. Ces supports tendent à être employés de plus en plus dans les applications d'archivage de fichiers et de documents numérisés.

Le disque optique numérique constitue un exemple de support non effaçable organisé en secteurs. Sur un tel support, il est possible d'écrire une information à tout moment, sur un secteur quelconque, mais il n'est plus possible de modifier ce secteur ensuite. Un tel support est dit de type "WORM" (pour "Write Once Read Many", c'est-à-dire écriture unique lecture multiple). Ces supports de type "WORM" sont très bien adaptés à l'archivage de données qui n'évoluent pas. Néanmoins, même dans les applications d'archivage, il est nécessaire de tenir à jour certaines informations, telles que les listes ou les index permettant l'accès aux données archivées.

Une solution communément admise consiste à associer au support non effaçable un support effaçable dans lequel sont mémorisées les informations qui peuvent évoluer. Cette solution présente deux inconvénients majeurs. Premièrement, la perte des informations contenues dans le support effaçable peut empêcher tout accès aux informations contenues dans le support non effaçable ; c'est le cas lorsque le support effaçable contient les listes ou les index permettant l'accès aux données archivées. Deuxièmement, le support non effaçable ne pouvant fonctionner qu'avec les informations contenues dans le support effaçable, ces deux supports doivent être associés en permanence, par exemple lors de transport ou de stockage.

On connaît également des méthodes permettant la mise à jour d'informations sur le disque non effaçable lui-même. Une première méthode de ce type est décrite dans la demande de brevet européen EP-A1-0 046 323. L'objectif principal de la méthode d'écriture et de lecture faisant l'objet de cette demande de brevet est la réalisation d'un enregistrement sans erreur sur un support d'informations non effaçable organisé en secteurs. Cette méthode consiste à écrire une information dans un secteur et à relire cette information immédiatement après l'écriture à des fins de vérification. Un vecteur d'adresse est alors ajouté à l'information qui doit être écrite dans le secteur suivant, ce vecteur d'adresse indiquant ainsi que le secteur inscrit précédemment contient une information correcte. Ce vecteur d'adresse permet, à la relecture, de ne transférer à l'utilisateur que l'information écrite correctement. Le problème de la mise à jour de l'information mémorisée est également évoqué (page 3, ligne 26 - page 4, ligne 22).

La méthode décrite permet de mettre à jour de petites quantités d'informations, telles que des pointeurs. Cette méthode a cependant deux défauts importants qui sont, d'une part, que l'information nouvelle est enregistrée au détriment du code correcteur d'erreur, ce qui peut amener rapidement à rendre l'ensemble du secteur inutilisable, et que d'autre part, cette méthode ne peut être réalisée qu'au niveau de l'unité de commande du support non effaçable, c'est-à-dire par le constructeur lui-même.

Une autre méthode de mise à jour de l'information sur un support non effaçable est décrite dans l'article "Dynamic data structures on optical diso" de Peter RATHMANN paru dans Proceedings of the International Conference on Data Engineering, Los Angeles, 24-27 avril 1984, pages 175 à 180. Une méthode préconisée par l'auteur consiste à associer à chaque enregistrement un ou plusieurs pointeurs. Lorsque l'information initiale est inscrite dans un secteur, les pointeurs associés sont laissés vides. Lorsqu'il devient nécessaire de mettre à jour l'information contenue dans le secteur, la nouvelle information est inscrite dans un nouveau secteur et le pointeur du secteur contenant l'information obsolète est chargé avec une valeur indiquant l'adresse du secteur contenant la nouvelle information, et le pointeur du secteur associé à la nouvelle information est laissée vide. La même opération est répétée pour les mises à jour successives, on obtient ainsi une liste chaînée de secteurs dont le dernier secteur contient l'information la plus récente.

L'auteur souligne que la difficulté la plus importante dans cette méthode est le fait de prévoir un pointeur de mise à jour. En effet, les supports non effaçables tels que les disques optiques sont conçus pour l'archivage de fichiers importants et sont mal équipés pour l'écriture de faibles quantités de données à un endroit quelconque d'un secteur, opération qui est nécessaire pour mettre à jour le pointeur. Un autre problème provient de la difficulté de réaliser un positionnement précis de la tête d'écriture. Enfin, l'écriture de petites quantités de données n'est pas très efficace car elle tend à diminuer la capacité de correction d'erreur dans l'information écrite dans le secteur.

On pourra se reporter également à l'état de la technique constitué par la demande de brevet GB-A 2 157 035 qui décrit un procédé d'écriture suivant le préambule de la revendication 1.

L'invention a pour objectif de remédier aux inconvénients des méthodes connues de mise à jour d'informations sur un support non effaçable. Le procédé de l'invention a notamment pour but de permettre l'enregistrement d'un nombre quelconque de modifications successives, sans dégrader l'information.

Le procédé de l'invention consiste à ajouter, aux informations de données à mémoriser, une information de chaînage pour lier logiquement un ensemble de secteurs contenant une information de données initiales et ses différentes mises à jours successives. Dans ce procédé, le secteur est considéré comme une entité indivisible pour les opérations d'écriture et de lecture. Les informations permettant de réaliser le chaînage des secteurs est écrite en même temps que les informations de données, ce qui permet d'éliminer les difficultés indiquées dans l'article, déjà cité, intitulé "dynamic data structure on optical disc" dues au fait que l'opération d'écriture d'un pointeur dans un secteur est dissociée de l'opération d'écriture de l'information de données dans ce secteur.

Dans le procédé de l'invention, le pointeur contenu dans la zone de chaînage est inscrit, en même temps que l'information de données du secteur, avec une valeur d'adresse désignant un secteur libre, qui pourra être utilisé pour la mise à jour de l'information de données. Cependant, pour ne pas gaspiller l'espace sur le support non effaçable, aucun secteur libre n'est réservé dans le cas où l'information de données contenue dans un secteur est déclarée non modifiable.

De manière précise, la demande a pour objet un procédé d'écriture d'informations sur un support non effaçable organisé en secteurs, chaque secteur comprenant au moins un champ de synchronisation, un champ de données, un champ de longueur, un champ d'adresse qui peut contenir une adresse pour désigner un secteur libre si une donnée est mise à jour et un champ de redondance, procédé dans lequel on inscrit un code de synchronisation dans le champ de synchronisation, une information de données dans le champ de données et la longueur de ladite information de données dans le champ de longueur, ledit procédé étant caractérisé en ce qu'on prévoit en outre un champ de type dans lequel on inscrit un code de type pour indiquer si l'information de données est fixe ou peut être mise à jour, en ce qu'on inscrit, dans le champ d'adresse, on bien un code d'adresse pour désigner un secteur libre si ladite information de données peut être mise à jour, ledit secteur libre étant ainsi réservé pour une éventuelle mise à jour de l'information de données, ou bien une valeur prédéterminée si ladite information de données est fixe, l'inscription dans tous les champs du secteur étant faite par une opération d'écriture unique le code de redondance inscrit dans le champ de redondance prenant en compte au moins les contenus des champs de données, de longueur, de type et d'adresse.

Par champ de redondance, on entend que l'on réserve, dans chaque secteur, un espace pour mémoriser un ou plusieurs bits de redondance. Il faut rappeler, et ceci est bien connu de l'homme de l'art, que ces bits de redondance ne sont pas nécessairement consécutifs sur le secteur mais qu'ils peuvent être répartis sur toute la longueur du secteur, notamment par entrelacement avec des données des autres champs du secteur. Tel est le cas par exemple lorsque les bits de redondance sont produits par un code de Hamming appliqué aux données correspondant à la concaténation des informations des champs de données, de longueur, de type et d'adresse.

De manière préférée, le code de type indiquant que les informations de données sont modifiables est pris dans un ensemble de codes prédéterminé comprenant au moins les codes suivants :

- début, qui indique que le secteur contient une information de donnée initiale, c'est-à-dire non modifiée,
- ajout, qui indique que l'information contenue dans le secteur courant doit être ajoutée à celle du secteur précédent, ce dernier étant celui dont le code d'adresse désigne ledit secteur courant,

- remplace, qui indique que l'information contenue dans le secteur courant doit remplacer celle du secteur précédent, ce dernier étant celui dont le code d'adresse désigne ledit secteur courant.

L'invention a également pour objet un procédé de lecture pour la restitution des informations mémorisées sur le support non effaçable.

Les caractéristiques et avantages de l'invention ressortiront mieux de la description qui va suivre, donnée à titre illustratif mais non limitatif, en référence aux dessins annexés, sur lesquels :

- la figure 1 illustre le découpage d'un secteur du support non effaçable en plusieurs champs d'informations, l'inscription d'informations dans les différents champs d'un même secteur se faisant, selon le procédé de l'invention, au cours d'une même opération d'écriture,
- la figure 2 illustre le chaînage de secteurs contenant des mises à jour successives d'une même information initiale,
- la figure 3 est un organigramme des différentes étapes du procédé d'écriture de l'invention, et
- la figure 4 est un organigramme des différentes étapes du procédé de lecture selon l'invention.

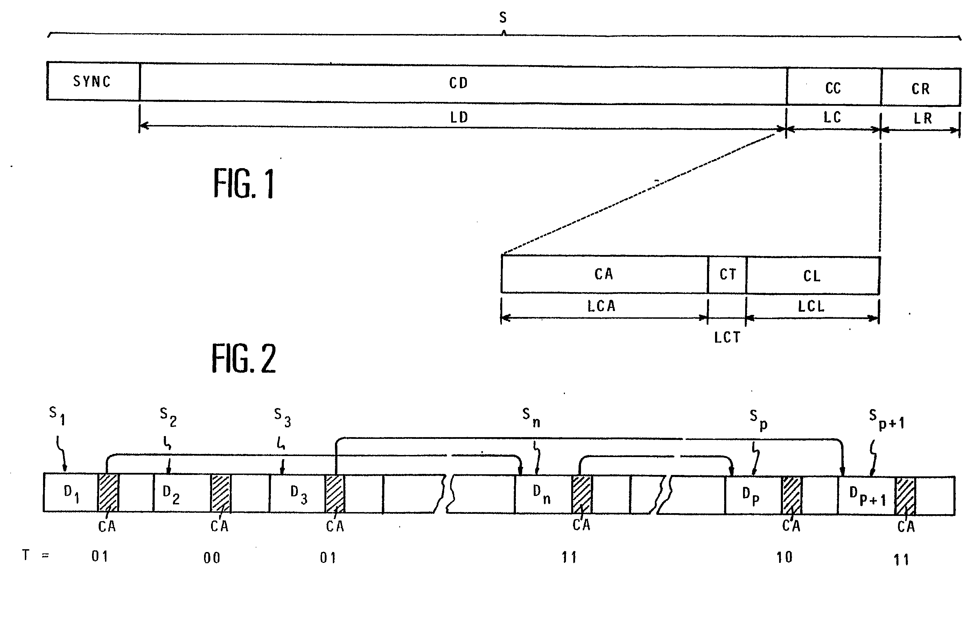

La figure 1 montre les différentes informations qui sont inscrites dans un secteur S du support non effaçable, dans l'hypothèse où les bits de redondance sont consécutifs. Une figure similaire pourrait être établie, lorsque les bits de redondance sont entrelacés avec au moins certaines autres données du secteur. Dans cette première hypothèse, les informations mémorisées en tête du secteur S sont des informations de synchronisation SYNC pour permettre à la tête de lecture-écriture du moyen de commande du support non effaçable de se positionner correctement au début du secteur pour une opération de lecture. Le secteur S comporte également un champ de données CD, un champ de chaînage CC et un champ de redondance CR. Les longueurs respectives de ces champs d'informations sont notées LD, LC et LR. Le champ de redondance reçoit un code correcteur d'erreur classique qui tient compte des données contenues dans les champs de données et de chaînage.

Quelle que soit la répartition des bits de redondance dans le secteur, le champ de chaînage CC se décompose lui-même en trois champs d'informations: un champ d'adresse CA, un champ de type CT et un champ de longueur CL. Ces différents champs ont des longueurs respectives LCA, LCT et LCL. Le champ d'adresse CA contient un pointeur pour désigner un autre secteur du support non effaçable. Cet autre secteur est utilisé lorsqu'il est nécessaire de mettre à jour l'information contenue dans le champ de données CD du secteur S. Le champ de type CT est utilisé pour indiquer si l'information de données contenue dans le champ de données CD est susceptible d'être mise à jour. Ce champ de données peut .donc contenir au moins deux valeurs, l'une indiquant que les informations de données mémorisées dans le champ de données CD ne sont pas modifiables, et l'autre indiquant que ces données peuvent être modifiées.

Bien que cela ne soit pas strictement nécessaire, il peut être avantageux de prévoir différents codes de type selon que l'information de données contenue dans le secteur S est une information initiale, ou une mise à jour ultérieure d'une information initiale. Dans certaines applications, l'opération de mise à jour peut consister uniquement en le remplacement de l'information obsolète. Un code de type unique indiquant la mise à jour est alors suffisant. En revanche, dans certaines autres applications, la mise à jour peut correspondre aussi bien au remplacement de l'information obsolète, ou en l'ajout d'une information qui vient compléter l'information initiale. Dans ce cas, deux codes de type de mise à jour sont nécessaires.

Le dernier champ d'informations d'un secteur S est le champ de longueur CL. Ce champ contient une valeur indiquant la longueur de l'information de données mémorisée dans le champ CD.

A titre d'exemple, pour un secteur S ayant une longueur de 1024 octets (non compris les informations de synchronisation et de redondance), la longueur LD du champ de données CD et la longueur LC du champ de chaînage CC peuvent être égales respectivement à 1020 octets et 4 octets. Ces 4 octets, soit 32 bits, peuvent par exemple être répartis de la manière suivante : 20 bits pour le champ d'adresse, soit $2^{20}$ adresses de secteurs possibles, 10 bits pour le champ de longueur CL soit $2^{10}$ octets, ce qui correspond à la longueur maximale de l'information contenue dans le champ de données CD, et 2 bits pour le champ de type. Ces deux bits permettent de représenter 4 valeurs correspondant à 4 types de secteur : un secteur contenant une information initiale qui peut être modifiée, un secteur contenant une information à ajouter à une information antérieure, un secteur contenant une information destinée à remplacer une information antérieure, et un secteur contenant une information qui ne peut être modifiée.

La figure 2 montre un état possible d'un support non effaçable dans lequel des informations $D_1$, $D_2$ et $D_3$ ont été mémorisées initialement, les informations de données $D_1$ et $D_3$ ayant été ultérieurement mises à jour. Le support non effaçable est constitué d'une suite consécutive de secteurs. Dans le cas d'un disque optique numérique, cette suite de secteurs forme un chemin en spirale sur la surface du disque.

A l'origine, tous les secteurs sont libres. Lors de la première opération d'écriture sur le support non effaçable, les informations de données à mémoriser sont inscrites dans l'ordre des secteurs libres d'indices croissants. Ainsi, dans l'exemple de la figure 2, les secteurs $S_1$, $S_2$, $S_3$ reçoivent respectivement des informations de données $D_1$, $D_2$ et $D_3$. L'inscription d'une information de données dans un secteur s'accompagne, pendant la même opération d'écriture, de l'inscription de la longueur de cette information de données dans le champ de longueur CL dudit secteur, du type de cette information dans le champ de type CT dudit secteur et de l'inscription d'un pointeur dans le champ d'adresse CA dudit secteur.

L'information de données inscrite dans un secteur, au cours de la première opération d'écriture sur le support non effaçable, peut être une information susceptible d'être mise à jour ou une information non modifiable. Le code de type T renseigne sur la nature du secteur. A titre d'exemple, les secteurs $S_1$ et $S_3$ de la figure 2 contiennent une information susceptible d'être mise à jour alors que le secteur $S_2$ contient une information qui ne peut être modifiée. Le code de type "00" désigne le deuxième cas et le code de type "01" le premier cas.

Le pointeur qui est mémorisé dans un secteur n'a d'utilité que si l'information contenue dans ce secteur peut être modifiée. Cette valeur est donc indifférente dans le cas où le type T a pour valeur "00". Une valeur prédéterminée quelconque pourra donc être inscrite dans ce cas dans le champ d'adresse du secteur. En revanche, lorsque le secteur contient une information qui peut être mise à jour, le pointeur est utilisé pour désigner un secteur libre dans lequel, en cas de besoin, l'information de mise à jour pourra être mémorisée. Le secteur libre désigné peut être simplement le premier secteur libre de la suite des secteurs du support non effaçable.

Considérons le cas où l'information de données $D_1$ contenue dans le secteur $S_1$ devient obsolète et doit être remplacée par une autre information. Cette modification de l'information $D_1$ est possible puisque la valeur du type T du secteur $S_1$ est égale à "01". L'information de données $D_n$ destinée à remplacer l'information de données $D_1$ devenue obsolète est inscrite dans le secteur $S_n$ dont l'adresse est indiquée par le pointeur contenu dans le champ d'adresse CA du secteur $S_1$.

L'opération d'écriture sur le secteur $S_n$ est analogue à l'opération d'écriture sur le secteur $S_1$, c'est-à-dire que les valeurs de tous les champs du secteur sont inscrites simultanément. Les champs de données CD et de longueur CL reçoivent respectivement l'information $D_n$ et la longueur de cette information. Le champ d'adresse CA reçoit un pointeur désignant un secteur libre du support non effaçable. Enfin, le champ de type CT reçoit une valeur indiquant que l'information $D_n$ remplace l'information $D_1$ devenue obsolète. La valeur de ce code de type est par exemple "11".

Le remplacement d'une information de données par une autre est une première possibilité de mise à jour. Une autre possibilité est de compléter l'information de données mémorisée par une autre information de données, l'information de données initiale étant conservée. Par exemple, comme représenté sur la figure 2, une information de données $D_p$ vient compléter l'information de données $D_n$. L'écriture de l'information de données complémentaire $D_p$ se fait dans le secteur $S_p$ désigné par le pointeur contenu dans le champ d'adresse du secteur $S_n$ dont l'information doit être complétée.

L'opération d'écriture dans ce secteur $S_p$ est analogue à l'opération d'écriture qui consiste à remplacer une information obsolète, la seule différence résidant dans la valeur inscrite dans le champ de type CT. Dans le cas de la mise à jour par adjonction d'une information de données, la valeur du code de type est par exemple égale à "10".

Le nombre de modifications successives affectant une information de données initiale, par remplacement ou adjonction, n'est limité que par la capacité du support non effaçable. En pratique, les informations qui sont mémorisées sur un support non effaçable ne sont appelées à subir que peu de modifications dans le temps, car sinon il n'y a aucun intérêt à mémoriser cette information sur un support non effaçable. Il suffit donc de prévoir un ou deux secteurs libres pour chaque secteur contenant une information susceptible d'être mise à jour.

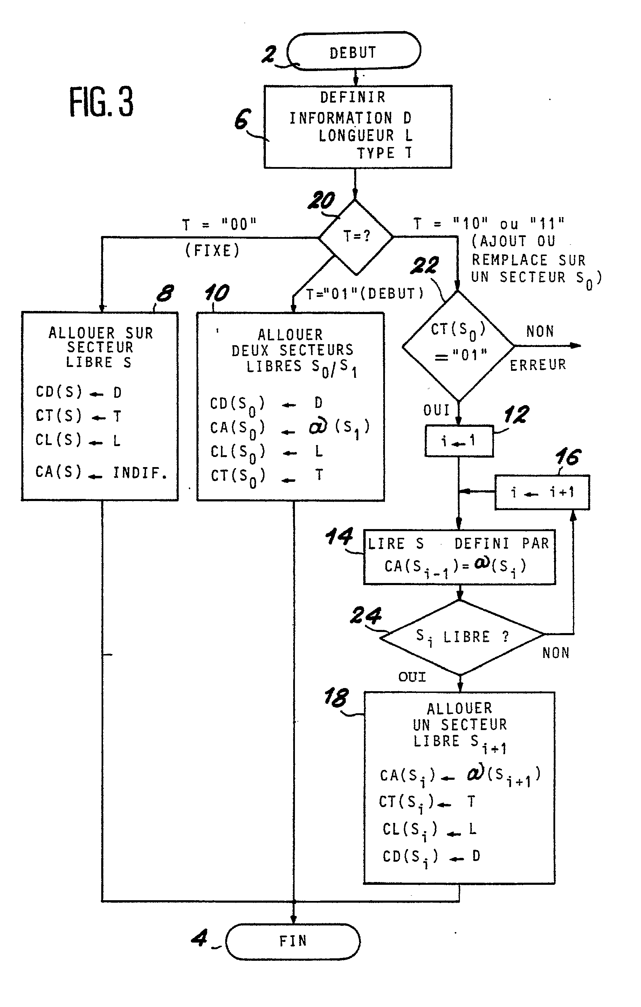

On a décrit, en référence à la figure 2, les différentes opérations d'écriture pouvant être effectuées sur le support non effaçable. Les caractéristiques de ces différentes opérations d'écriture, qui constituent le procédé d'écriture de l'invention, apparaîtront plus clairement à la lecture de la figure 3 qui représente un organigramme de ce procédé d'écriture.

Cet organigramme comprend des étapes d'opération représentées par un rectangle à une entrée et une sortie, et des étapes d'interrogation ou de test représentées par un losange à une entrée et au moins deux sorties, les différentes sorties correspondant aux différentes réponses possibles au test. L'ensemble de ces étapes est compris entre une étape de début 2 et une étape de fin 4.

Les étapes d'opération sont les suivantes :

a) une étape 4 de définition de l'information de données D à mémoriser, de la longueur L de cette information de données et du type T du secteur dans lequel cette information de données va être mémorisée. Ces informations sont inscrites dans une mémoire tampon en attendant d'être transférées sur un secteur du support non effaçable ;

b) une opération 8 d'allocation d'un secteur libre S du support non effaçable, et d'écriture dans les champs de données, de type et de longueur de ce secteur des informations de données D, de type T et de longueur L. Une valeur quelconque est également inscrite dans le champ d'adresse du secteur S ;

c) une opération 10 d'allocation de deux secteurs libres $S_0$ et $S_1$, et d'inscription dans les champs de données, de type, de longueur et d'adresse du secteur $S_0$ des informations de données D, de type T, de longueur L et d'adresse du secteur $S_1$ ;

d) une opération 12 d'initialisation d'un indice de boucle i à la valeur 1 ;

e) une opération 14 de lecture du contenu d'un secteur $S_i$ défini comme étant le i+1ième secteur d'une chaîne de secteurs commençant par un secteur $S_0$ de type "01" ;

f) une opération 16 d'incrémentation de l'indice de boucle i, et

g) une opération 18 d'allocation d'un secteur libre $S_{i+1}$, et d'écriture dans les champs de données, de type et de longueur d'un secteur $S_i$ des informations de données D, de type T et de longueur L, et d'écriture dans le champ d'adresse du secteur $S_i$ de l'adresse du secteur libre de l'adresse $S_{i+1}$.

L'organigramme comprend également les trois test suivants :

a) un test 20 sur la valeur du type T défini dans l'étape d'opération 6 ;

b) un test 22 sur le type d'un secteur $S_0$ dont une mise à jour de l'information de données est demandée ;

c) un test 24 sur l'état, libre ou non, d'un secteur $S_i$.

Dans tous les cas, le procédé d'écriture commence par l'étape de début 2, suivie de l'opération 6 consistant à définir les valeurs à inscrire dans les champs de données, de longueur et de type d'un secteur. Le procédé se poursuit par le test 20 qui analyse la valeur du type T. Trois réponses sont possibles qui sont soit T="00" (cas d'une information de données non modifiable), soit T="01" (cas d'une information de données initiale pouvant être mise à jour), soit T="10" ou "11" (information de données modifiant une information déjà mémorisée dans un secteur).

Dans le premier cas (T="00"), le procédé se poursuit par l'exécution de l'opération 8. Un seul secteur est alloué et il reçoit les informations définies dans l'opération 6.

Dans le deuxième cas (T="01"), le test 20 est suivi de l'opération 10. Deux secteurs libres sont alloués, le premier pour recevoir les informations définies dans l'opération 6, le second désigné par le pointeur inscrit dans le champ d'adresse du premier secteur pour permettre une mise à jour éventuelle de l'information de données contenue dans ce premier secteur.

Dans le troisième cas (T="10" ou "11"), le procédé d'écriture comprend successivement le test 22, l'opération 12, l'opération 14, le test 24, puis l'opération 18 si la réponse au test 24 est positive, ou l'opération 16 puis à nouveau l'opération 14 et le test 24, si la réponse au test 24 est négative.

Une opération de mise à jour sur une information de données contenue dans un secteur du support non effaçable peut être une opération d'ajout d'une information de données (T="10") ou une opération de remplacement de ladite donnée (T="11"). Dans les deux cas, l'opération de mise à jour porte sur une information de donnée contenue dans un secteur de type T="01". L'objet du test 22 est de vérifier si cette condition est réalisée. Si ce n'est pas le cas, un code d'erreur est émis et la mise à jour de l'information de donnée ne peut être réalisée.

Si le secteur sur lequel porte la demande de mise à jour est bien du type "01", il faut parvenir au secteur contenant la mise à jour la plus récente en suivant le chaînage entre le secteur initial et ce dernier secteur. Ce parcours de la chaîne des secteurs est réalisé par les opérations 12, 14 et 16 et le test 24. On reconnaît qu'un secteur est le dernier d'une chaîne lorsque son successeur, désigné par le pointeur contenu dans le champ d'adresse dudit secteur, est un secteur libre. L'opération 18 est alors effectuée pour trouver un autre secteur libre $S_{i+1}$ et pour inscrire dans le secteur $S_i$ les informations de donnée, de type et de longueur définies dans l'opération 6.

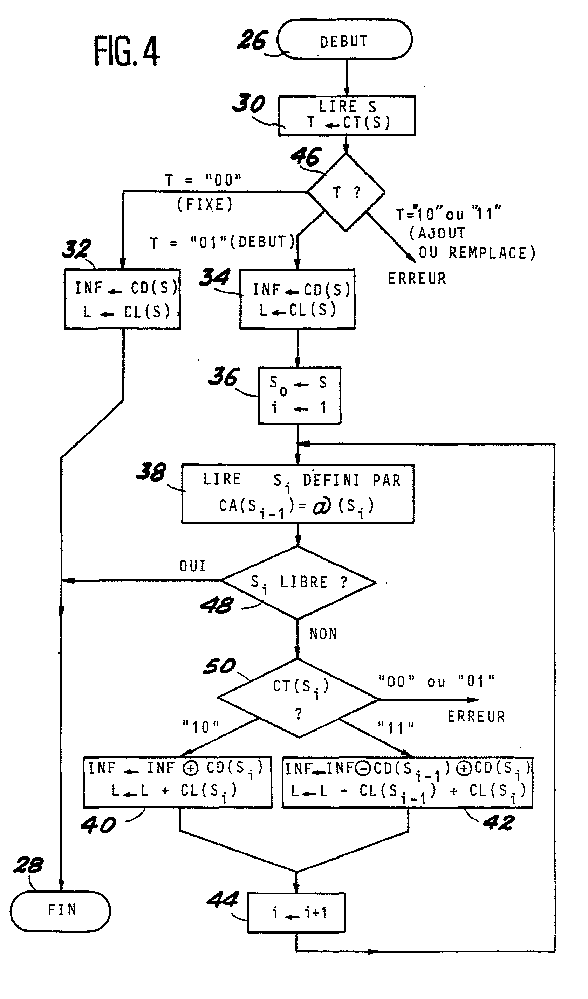

On va maintenant décrire, en référence à l'organigramme de la figure 4, le procédé de lecture correspondant au procédé d'écriture de l'invention.

Cet organigramme comprend un ensemble d'opérations, représentées chacune par un rectangle à une entrée et une sortie, et un ensemble de tests, représentés chacun par un losange à une entrée et plusieurs sorties, chaque sortie correspondant à une réponse particulière au test. L'organigramme comprend également une étape de début 26 et une étape de fin 28. L'opération de lecture porte sur un secteur S du support non effaçable. L'organigramme comprend les opérations suivantes :

a) une opération 30 de lecture du contenu du secteur S et d'affectation à une variable T de la valeur du champ de type du secteur S ;

b) deux opérations 32, 34 d'affectation à une variable INF de la valeur du champ de données du secteur S, et d'affectation à une variable L de la valeur du champ de longueur du secteur S ;

c) une opération 36 d'affectation du secteur S à une variable $S_0$ et d'initialisation à la valeur 1 d'une variable de boucle i ;

d) une opération 38 de lecture d'un secteur $S_i$ égale au $i+1^{ème}$ secteur d'une chaîne de secteurs commençant par un secteur de type T="01" ;

e) une opération 40 de mise à jour de l'information de données INF par adjonction de l'information contenue dans le champ de données du secteur $S_i$, et de mise à jour de la longueur L de l'information INF par addition de la valeur contenue dans le champ de longueur du secteur $S_i$ ;

f) une opération 42 de mise à jour de l'information INF par élimination de l'information de données contenue dans le champ de données du secteur $S_{i-1}$ et par ajout de l'information de données contenue dans le champ de données du secteur $S_i$, et de mise à jour de la longueur L de cette information INF par soustraction de la valeur contenue dans le champ de longueur du secteur $S_{i-1}$ et par addition de la valeur contenue dans le champ de longueur du secteur $S_i$ ;

g) une opération 44 d'incrémentation de l'indice de boucle i.

L'organigramme comporte également les tests suivants :

a) un test 46 sur la valeur de la variable T calculée dans l'opération 30 ;

b) un test 48 sur l'état, libre ou non, du secteur $S_i$ ; et

c) un test 50 sur la valeur contenue dans le champ de type du secteur $S_i$.

L'opération de lecture d'un secteur S dépend de la valeur du champ de type CT de ce secteur. Cette valeur est déterminée au cours de l'opération 30. Le test 46 sur la valeur du champ de type est ensuite exécuté.

Si cette valeur est "00", indiquant que le secteur S contient une information de données qui ne peut pas être modifiée, l'opération de lecture se poursuit par l'opération 32 ; la donnée INF cherchée est contenue dans le champ de données CD du secteur S et sa longueur L est égale à la valeur du champ de longueur CL du secteur S. L'opération de lecture est terminée.

Dans le cas où le champ de type contient la valeur "01", indiquant que le secteur S contient une information de données initiale qui a pu être mise à jour ultérieurement, la lecture nécessite de parcourir la chaîne des secteurs contenant les mises à jour successives. Cette lecture commence par l'opération 34 qui affecte l'information de donnée contenue dans le champ de données du secteur S à une variable INF. Cette variable est stockée dans une mémoire de travail pendant l'opération de lecture. De même, une variable L est définie pour indiquer la longueur des données de la variable INF. Cette variable L est initialisée avec la valeur du champ de longueur CL du secteur S.

L'opération suivante est l'opération 36 d'initialisation de deux variables de boucle, une variable $S_0$ avec le secteur S et une variable i avec la valeur 1.

Le successeur $S_1$ du secteur initial $S_0$ est ensuite déterminé par l'opération 38. L'adresse de ce successeur est la valeur contenue dans le champ d'adresse CA du secteur $S_0$ Le test 48 est appliqué au secteur $S_1$ pour savoir s'il est libre ou non. Si le secteur $S_1$ est libre, c'est qu'il constitue le dernier secteur de la chaîne de secteurs commençant par le secteur $S_0$ ; la lecture est donc terminée. Si le secteur $S_1$ n'est pas libre, c'est qu'il contient une information de mise à jour de l'information de données contenue dans la variable INF.

Cette information de données est normalement une information de données destinée à remplacer (si le type T a pour valeur "11"), ou à être ajoutée à (si le type T à pour valeur "10"), l'information de données déjà lue dans les secteurs précédents et mémorisée dans la variable INF. L'objet du test 50 est précisément de déterminer le type T du secteur $S_1$. Les valeurs de type "00" et "01" sont considérées comme des erreurs.

Si le type du secteur $S_1$ a pour valeur "10", les variables INF et L sont mises à jour par l'opération 40. Celle-ci consiste à ajouter à l'information de données déjà contenue dans la variable INF, l'information de données contenue dans le champ de données CD du secteur $S_1$, et à ajouter à la valeur L la valeur du champ de longueur CL du secteur $S_1$.

Si le type du secteur $S_1$ a pour valeur "11", la mise à jour des variables INF et L est réalisée selon l'opération 42. Celle-ci consiste à supprimer dans la variable INF l'information de données correspondant au champ de données CD du secteur $S_0$, antécédent de $S_1$, et à ajouter l'information de données contenue dans le champ de données CD du secteur $S_1$. La variable L est modifiée dans le même sens.

Après la mise à jour des variables INF et L, l'indice de boucle i est incrémenté par l'opération 44 et le traitement continue par l'opération 38 pour le secteur suivant de la chaîne.

L'opération est répétée jusqu'à ce que le secteur $S_i$ lu au cours de l'opération 38 soit un secteur libre. La lecture est alors terminée. La variable INF contient l'information de données cherchée ; sa longueur est égale à L.

## Revendications

1. Procédé d'écriture d'informations sur un support non effaçable organisé en secteurs, chaque secteur comprenant au moins un champ de synchronisation (SYNC), un champ de données (CD), un champ delongueur (CL), un champ d'adresse (CA) qui peut contenir une adresse pour désigner un secteur libre si une donnée est mise à jour et un champ de redondance (CR), procédé dans lequel on inscrit un code de synchronisation dans le champ de synchronisation, une information de données dans le champs de données et la longueur de ladite information de données dans le champ de longueur, ledit procédé étant caractérisé en ce qu'on prévoit en outre un champ de type (CT) dans lequel on inscrit un code de type pour indiquer si l'information de données est fixe ou peut être mise à jour, en ce qu'on inscrit, dans le champ d'adresse, ou bien un code d'adresse pour désigner un secteur libre si ladite information de données peut être mise à jour, ledit secteur libre étant ainsi réservé pour une éventuelle mise à jour de l'information de données, ou bien une valeur prédéterminée si ladite information de données est fixe, l'inscription dans tous le champs du secteur étant faite par une opération d'écriture unique le code de redondance inscrit dans le champ de redondance prenant en compte au moins les contenus des champs de données, de longueur, de type et d'adresse.

2. Procédé selon la revendication 1, caractérisé en ce que le code de type indiquant qu'une information de données peut être mise à jour est pris dans un ensemble de codes prédéterminés comprenant au moins les codes suivants:
– début, qui indique que le secteur est le premier secteur inscrit,
– ajout, qui indique que l'information contenue dans le secteur courant doit être ajoutée à celle du secteur précédent, ce dernier étant celui dont le code d'adresse désigne ledit secteur courant,
– remplace, qui indique que l'information contenue dans le secteur courant doit remplacer celle du secteur précédent, ce dernier étant celui dont le code d'adresse désigne ledit secteur courant.

3. Procédé selon l'une quelconque des revendications 1 et 2, caractérisé en ce que, pour la restitution d'une information de données mémorisée, on lit un premier secteur contenant une information de données initiale, on détermine le type dudit premier secteur, l'information restituée étant égale à l'information de données dudit secteur si le type correspond à une information de données fixe, l'information restituée lorsque le type correspond à une information de données pouvant être mise à jour étant obtenue de la manière suivante:

a) pour chaque secteur de la chaîne de secteurs commençant par ledit premier secteur, on extrait l'information de données dudit secteur et on détermine le secteur suivant par le pointeur du champ d'adresse dudit secteur, cette opération étant répétée jusqu'à ce que le secteur suivant d'un secteur soit un secteur libre,
b) on modifie l'information de données initiale par les informations de données extraites, chaque modification (ajout ou remplacement) étant déterminée par le type du secteur duquel est extraite l'information de données, l'information restituée étant égale à l'information initiale modifiée.

## Claims

1. Method for writing informations on a non-erasable support organized into sectors, each sector comprising at least one synchronization field (SYNC), a data field (CD), a length field (CL), an address field (CA) which can contain an address for designating a free sector if a data item is updated and a redundancy field (CR), in which a synchronization code is written into the synchronization field, a data information into the data field and the length of said data information into the length field, characterized in that there is also a type field (CT) in which is written a type code for indicating whether the data information is fixed or can be updated, in that in the address field is written either an address code for designating a free sector if said data information can be updated, said free field being reserved for a possible updating of the data information or a predetermined value if said data information is fixed, writing into all the fields of the sector being carried out by a single writing information, the redundancy code written in the redundancy field taking into account at least the contents of the data, length, type and address fields.

2. Method according to claim 1, characterized in that the type code indicating that a data information can be updated is taken from a group of predetermined codes comprising at least the following codes:
start which indicates that the sector is the first sector written,
addition which indicates that the information contained in the current sector must be added to that of the preceding sector, the latter being that whose address code designates said current sector,
replacement which indicates that the information contained in the current sector must replace that of the preceding sector, the latter being that whose address code designates said current sector.

3. Method according to either of the claims 1 and 2, characterized in that for restoring a stored data information, a first sector containing an initial data information is read, the type of said first sector is determined, the restored information being equal to the data information of said sector if the type corresponds to a fixed data information, whereas when the type corresponds to a data information which can be updated the restored information is obtained in the following way:
a) for each sector of the chain of sectors commencing by said first sector, the data information is extracted from said sector and the following sector is determined by the pointer of the address field of said sector, said operation being repeated until the following sector is a free sector,

b) the initial data information is modified by the extracted data informations, each modification (addition or replacement) being determined by the type of sector from which the data information is extracted, the restored information being equal to the modified initial information.

## Patentansprüche

1. Informationsaufzeichnungsverfahren auf einen nicht löschbaren, in Sektoren aufgeteilten Träger, wobei jeder Sektor wenigstens ein Synchronisationsfeld (SYNC), ein Datenfeld (CD), ein Längenfeld (CL), ein Adreßfeld (CA), das eine Adresse zum Bezeichnen eines freien Sektors, falls ein Datum aktualisiert wird, enthalten kann, und ein Redundanzfeld (CR) aufweist, bei welchem Verfahren man einen Synchronisationscode in das Synchronisationsfeld, eine Dateninformation in das Datenfeld und die Länge der Dateninformation in das Längenfeld schreibt, wobei das Verfahren dadurch gekennzeichnet ist, daß man ein Typenfeld (CT) vorsieht, in welches man einen Typencode schreibt, um anzugeben, ob die Dateninformation fest ist oder aktualisiert werden kann, daß man in das Adreßfeld entweder einen Adreßcode, zum Bezeichnen eines freien Sektors, falls die Dateninformation aktualisiert werden kann, wobei der freie Sektor für eine eventuelle Aktualisierung der Dateninformation reserviert ist, oder einen vorbestimmten Wert schreibt, falls die Dateninformation fest ist, wobei das Einschreiben in alle Felder des Sektors mittels einer eindeutigen Schreiboperation durchgeführt wird, wobei der in das Redundanzfeld eingeschriebene Redundanzcode wenigstens den Inhalt der Daten-, Längen-, Typen- und Adreßfelder berücksichtigt.

2. Verfahren nach Anspruch 1, dadurch gekennzeichnet, daß der Typencode, der angibt, ob eine Dateninformation aktualisiert werden kann, aus einer Anordnung von vorbestimmten Codes genommen wird, die wenigstens folgende Codes umfaßt:

– Beginn, der angibt, daß der Sektor der erste beschriebene Sektor ist,

– Anfügung, der angibt, daß die im laufenden Sektor enthaltene Information an die des vorhergehenden Sektors angefügt werden soll, wobei der letztere derjenige ist, dessen Adreßcode den laufenden Sektor bezeichnet,

– Ersetzung, der angibt, daß die im laufenden Sektor enthaltene Information die des vorhergehenden Sektors ersetzen soll, wobei der letztere derjenige ist, dessen Adreßcode den laufenden Sektor bezeichnet.

3. Verfahren nach einem der Ansprüche 1 und 2, dadurch gekennzeichnet, daß man für die Wiedergabe einer Information aus gespeicherten Daten einen ersten, eine Startinformation von Daten enthaltenden Sektor liest und man den Typ des ersten Sektors bestimmt, wobei die wiedergegebene Information gleich der Dateninformation des Sektors ist, wenn der Typ einer festen Dateninformation entspricht, und die wiedergegebene Information für den Fall, daß der Typ einer Dateninformation entspricht, die aktualisiert worden sein kann, auf folgende Weise erhalten wird:

a) für jeden Sektor der Sektorkette beginnend mit dem ersten Sektor entnimmt man die Dateninformation des Sektors und man bestimmt den folgenden Sektor durch den Zeiger des Adreßfeldes des Sektors, wobei diese Operation wiederholt wird, bis der auf einen Sektor folgende Sektor ein freier Sektor ist,

b) man verändert die Startinformation der Daten durch die Informationen der entnommenen Daten, wobei jede Veränderung (Anfügung oder Ersetzung) durch den Typ des Sektors, aus dem die Dateninformation entnommen wurde, bestimmt wird, wobei die wiedergegebene Information gleich der veränderten Startinformation ist.

FIG. 1

FIG. 2

FIG. 3

EP 0 227 530 B1

**FIG. 4**

*26* — DEBUT

*30* — LIRE S
$T \leftarrow CT(S)$

*46* — T ?

T = "00"
(FIXE)

T = "01" (DEBUT)

T = "10" ou "11"
(AJOUT
OU REMPLACE)

ERREUR

*32*
$INF \leftarrow CD(S)$
$L \leftarrow CL(S)$

*34*
$INF \leftarrow CD(S)$
$L \leftarrow CL(S)$

*36*
$S_0 \leftarrow S$
$i \leftarrow 1$

*38* — LIRE $S_i$ DÉFINI PAR
$CA(S_{i-1}) = @(S_i)$

OUI

$S_i$ LIBRE ?

*48*

NON

*50* — $CT(S_i)$ ?

"00" ou "01"

ERREUR

"10"

"11"

$INF \leftarrow INF \oplus CD(S_i)$
$L \leftarrow L + CL(S_i)$

*40*

$INF \leftarrow INF \ominus CD(S_{i-1}) \oplus CD(S_i)$
$L \leftarrow L - CL(S_{i-1}) + CL(S_i)$

*42*

*28*

FIN

*44* — $i \leftarrow i+1$